# EUROPEAN PATENT APPLICATION

(11) **EP 4 458 717 A1**
(43) Date of publication of application: **06.11.2024**
(21) Application number: 22912965.5
(22) Date of filing: 04.03.2022
(51) Int. Cl.: B65D 41/04, B65D 41/34

(54) **BOTTLE CAP AND PACKAGING BOTTLE**

(30) Priority: 30.12.2021 CN 202111657402
(71) Applicant: Nongfu Spring (Zheijang) Research and Development Co., Ltd., Hangzhou, Zhejiang 310024 (CN)
(72) Inventor: FENG, Wenliang, Hangzhou Zhejiang 310024 (CN); HOU, Yingliang, Hangzhou Zhejiang 310024 (CN); LI, Kaijun, Hangzhou Zhejiang 310024 (CN); DUAN, Jinzhao, Hangzhou Zhejiang 310024 (CN)
(74) Representative: PGA S.p.A., Milano, Succursale di Lugano
(86) International application number: PCT/CN2022/079242
(87) International publication number: WO 2023/123659

(57) **Abstract**

A bottle cap and a packaging bottle are disclosed. The bottle cap includes a cap (1) with a layered structure. The cap (1) includes a first layer (2), a second layer (3) and a third layer (4). The first layer (2) is an outer layer, the third layer (4) is an inner layer, the second layer (3) is an intermediate layer located between the first layer (2) and the third layer (4), and the second layer (3) includes at least one low oxygen-permeable barrier layer.

## Description

### CROSS-REFERENCE TO RELATED APPLICATIONS

This application is based on and claims priority to Chinese Patent Application No. 202111657402.5, filed on December 30, 2021, the disclosure of which is hereby incorporated by reference in its entirety.

### TECHNICAL FIELD

The present disclosure relates to a bottle cap and a packaging bottle.

### BACKGROUND

Generally, beverage products are packaged in bottle caps and bottles. The bottle caps are made of a polyolefin material and the bottles are made of a polyethylene terephthalate (PET) material. The polyolefin material is worse than the PET material in the capacity of blocking oxygen or other gases. Therefore, the barrier property of the bottle cap is a key to affect shelf lives of the products.

The plastic bottle cap in the related art is a single-layer structure formed by the polyolefin material through a process such as injection molding or compression molding, has relatively poor barrier property and easily causes product oxidation. In some related technologies known to inventors, there is a solution that the bottle cap is processed by a two-layer structure, and one layer of the two-layer structure is a low oxygen-permeable barrier layer.

The statements herein only provide background information related to the present disclosure and do not necessarily form the prior art.

### SUMMARY

According to the research of the inventors, the bottle cap with the two-layer structure in the related art still has the problem of unsatisfactory barrier effect, more materials are required for the low oxygen-permeable barrier layer, and the cost is higher.

In view of this, embodiments of the present disclosure provide a bottle cap and a packaging bottle, which can improve the freshness protection performance of the products and reduce the processing cost.

In one aspect of the present disclosure, a bottle cap is provided and includes a cap with a layered structure, wherein the cap includes a first layer, a second layer and a third layer, the first layer is an outer layer, the third layer is an inner layer, the second layer is an intermediate layer located between the first layer and the third layer, and the second layer includes at least one low oxygen-permeable barrier layer.

In some embodiments, an oxygen transmission rate of the second layer is configured to be 0.0001-0.001cc/pkg*day.

In some embodiments, a material of the low oxygen-permeable barrier layer includes nylon, ethylene-vinyl alcohol copolymer, polyvinyl alcohol, polyvinylidene chloride, aluminum and/or amorphous polyethylene terephthalate.

In some embodiments, the at least one low oxygen-permeable barrier layer includes a nylon film, an EVOH film, a PVA film, a PVDC film, an aluminum foil film and/or an APET film.

In some embodiments, the first layer and the third layer are made of the same material.

In some embodiments, a thickness of the second layer is 0.001mm to 1.2mm.

In some embodiments, the cap includes a cap top and a cap body, the cap top includes the first layer, the second layer and the third layer, and the cap body includes the first layer.

In some embodiments, the cap includes a cap top and a cap body, and each of the cap top and the cap body includes the first layer, the second layer and the third layer.

In some embodiments, the cap includes a cap top and a cap body, and the second layer is disposed on the cap top and a periphery of a side of the cap body close to the cap top, so that the second layer can cover a bottle mouth to be covered.

In some embodiments, the first layer is made of polyolefin.

In one aspect of the present disclosure, a packaging bottle is provided and includes a bottle body and the aforementioned bottle cap.

According to the embodiments of the present disclosure, the bottle cap with blocking of a multi-layer structure is formed by at least one low oxygen-permeable barrier layer included in the intermediate layer of the cap. Compared with the bottle cap with a two-layer structure, the barrier performance of the bottle cap is significantly improved, and the entrance of external gas and the loss of internal gas can be effectively blocked, thereby protecting product contents, keeping freshness of the products, prolonging the shelf lives of the products, and reducing material requirements of the low oxygen-permeable barrier layer, so as to reduce the processing cost.

### BRIEF DESCRIPTION OF THE DRAWINGS

In order to explain the embodiments of the present disclosure or the technical solutions in the prior art more clearly, the accompanying drawings required to be used in the descriptions of the embodiments or the prior art will be briefly introduced below. Apparently, the accompanying drawings in the following descriptions are only some embodiments of the present disclosure, and other accompanying drawings can be obtained by those ordinary skilled in the art according to these drawings without creative labor.
Fig. 1 is a schematic cross-sectional view of some embodiments of a bottle cap according to the present disclosure; and
Fig. 2 is a partially enlarged schematic view of the position of ellipse A in Fig. 1.

### Description of reference signs

1, cap; 2, first layer; 3, second layer; 4, third layer; 41, internal thread.

### DETAILED DESCRIPTION

Various exemplary embodiments of the present disclosure will now be described in detail with reference to the accompanying drawings. The descriptions of the exemplary embodiments are merely illustrative and are in no way intended to limit the present disclosure, and application or uses thereof. The present disclosure can be implemented in many different forms and is not limited to the embodiments described herein. These embodiments are provided, so that the present disclosure will be thorough and complete, and will fully convey the scope of the present disclosure to those skilled in the art. It should be noted that unless otherwise specified, the relative arrangement of components and steps, the compositions of materials, numerical expressions and numerical values set forth in these embodiments should be interpreted as merely illustrative and not as limitative.

"First", "second" and other similar words used in the present disclosure do not indicate any order, quantity or importance, but are only used to distinguish different parts. Similar words such as "include" or "comprise" mean that the elements before such words cover the elements listed after such words, without excluding the possibility of covering other elements. "Upper", "lower", "left", "right" and the like are only used to indicate a relative positional relationship. After the absolute position of a described object changes, the relative positional relationship may also change accordingly.

In the present disclosure, when it is described that a specific device is located between a first device and a second device, there may be an intermediate device between the specific device and the first device or the second device or not. When it is described that the specific device is connected to other devices, the specific device may be directly connected to other devices without the intermediate device, and may also have the intermediate device without being directly connected to other devices.

All terms used in the present disclosure have the same meanings as understood by those ordinary skilled in the art to which the present disclosure belongs, unless otherwise defined particularly. It should also be understood that the terms defined in, for example, general dictionaries should be interpreted as having the meanings consistent with their meanings in the context of the related art, and should not be interpreted in an idealized or extremely formal sense, unless explicitly defined herein.

The technologies, methods and equipment known to those ordinary skilled in the related art may not be discussed in detail, but the technologies, methods and equipment should be regarded as part of the description under appropriate circumstances.

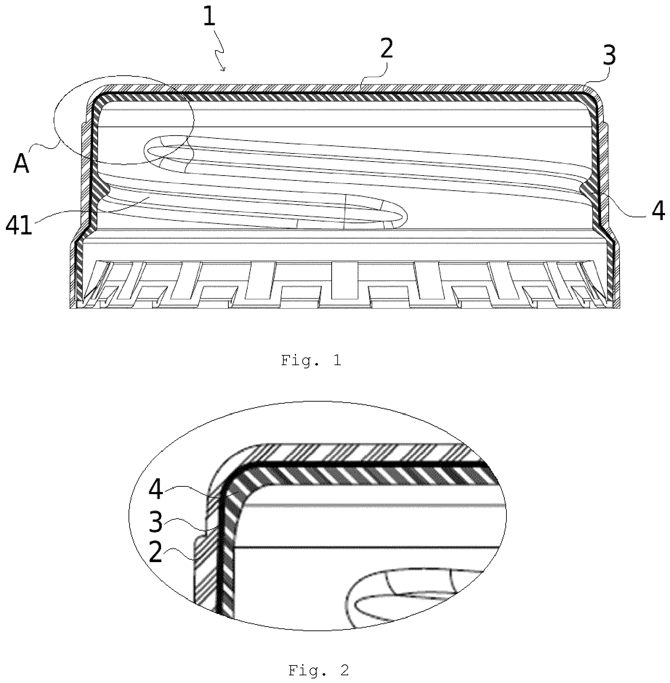

Fig. 1 is a schematic cross-sectional view of some embodiments of a bottle cap according to the present disclosure. Fig. 2 is a partially enlarged schematic view of the position of ellipse A in Fig. 1. Referring to Fig. 1 and Fig. 2, some embodiments of the present disclosure provide a bottle cap, which includes a cap 1 with a layered structure. The cap 1 includes a first layer 2, a second layer 3 and a third layer 4. The first layer 2 is an outer layer and the third layer 4 is an inner layer. The second layer 3 is an intermediate layer located between the first layer 2 and the third layer 4, and the second layer 3 includes at least one low oxygen-permeable barrier layer.

In the present embodiment, the bottle cap with blocking of a multi-layer structure is formed by at least one low oxygen-permeable barrier layer included in the intermediate layer of the cap. Compared with the bottle cap with a two-layer structure, the barrier performance of the bottle cap is significantly improved, and the entrance of external gas and the loss of internal gas can be effectively blocked, thereby protecting product contents, keeping freshness of the products, and prolonging the shelf lives of the products. Besides, since the thickness of the second layer 3 as the intermediate layer is reduced, material requirements of the low oxygen-permeable barrier layer are reduced accordingly, thereby reducing the processing cost.

Practice has proved that the bottle cap with a three-layer structure according to the embodiment of the present disclosure contains a low oxygen-permeable barrier layer made of a low oxygen-permeable barrier material in the intermediate layer. Compared with the bottle cap made of the low oxygen-permeable barrier material in the outer layer or the inner layer, the bottle cap not only has lower oxygen transmission rate and better barrier performance, but also significantly reduces the requirements on the low oxygen-permeable barrier material, reduces the cost while improving the performance, and has a very good commercial application prospect and popularization value.

In Fig. 1 and Fig. 2, the first layer 2 of the cap 1 is shown by cross-sectional lines in the form of thin solid lines at intervals inclined from right to left, the third layer 4 is shown by cross-sectional lines in the form of thick solid lines at intervals inclined from left to right, and the second layer 3 is shown by the black filled part between the first layer 2 and the third layer 4. The first layer 2 of the cap 1 is an outer layer, and fingers of a user may directly contact this layer to apply pressure or torsional force. The third layer 3 of the cap 1 is an inner layer, and the inner side of the third layer may have internal threads 41 to form threaded fit with external threads of a bottle mouth.

In order to ensure the low oxygen transmission rate, in some embodiments, the oxygen transmission rate of the second layer 3 is configured to be 0.0001-0.001cc/pkg*day.

In some embodiments, the material of the low oxygen-permeable barrier layer includes nylon, ethylene-vinyl alcohol copolymer, polyvinyl alcohol, polyvinylidene chloride, aluminum and/or amorphous polyethylene terephthalate. That is, the material of the low oxygen-permeable barrier layer includes at least one, at least two, at least three, at least four, at least five or all six of the nylon, ethylene-vinyl alcohol copolymer, polyvinyl alcohol, polyvinylidene chloride, aluminum and amorphous polyethylene terephthalate. Practice has shown that the advantage of low oxygen transmission rate can be realized by making the low oxygen-permeable barrier layer through the above materials, and the materials are easy to obtain and have higher practicability.

In some embodiments, the at least one low oxygen-permeable barrier layer includes a nylon film, an EVOH film (ethylene-vinyl alcohol copolymer film), a PVA film (polyvinyl alcohol film), a PVDC film (polyvinylidene chloride film), an aluminum foil film (AL film) and/or an APET film (amorphous polyethylene terephthalate film). That is, the at least one low oxygen-permeable barrier layer includes at least one, at least two, at least three, at least four, at least five or all six of the nylon film, EVOH film, PVA film, PVDC film, aluminum foil film and APET film. The practice has shown that the advantage of low oxygen transmission rate can be achieved by making the low oxygen-permeable barrier layer through a thin film processed from the above materials, and the materials are easy to obtain and have higher practicability.

In some embodiments, the at least one low oxygen-permeable barrier layer includes 1 to 7 low oxygen-permeable barrier layers.

Referring to Fig. 1, in some embodiments, the manufacture of the bottle cap with blocking of the multi-layer structure may be completed by injection molding or compression molding at a time.

Referring to Fig. 1, in some embodiments, the first layer 2 and the third layer 4 are made of the same material. For example, both the first layer 2 and the third layer 4 are made of polyolefin, so as to save the manufacturing cost while ensuring the barrier performance of the bottle cap.

In order to ensure a proper thickness, in some embodiments, the thickness of the second layer 3 is 0.001mm to 1.2mm.

The thickness and the coverage area of the barrier layer may be controlled by a processing technology, and the coverage area may be the whole cap or part of the cap. In some embodiments, the cap 1 includes a cap top and a cap body. The cap top includes the first layer 2, the second layer 3 and the third layer 4, and the cap body includes the first layer 2 to save the cost.

In some embodiments, as shown in Fig. 1, the cap 1 includes a cap top and a cap body, each of the cap top and the cap body includes the first layer 2, the second layer 3 and the third layer 4, and the barrier layer covers the whole cap to ensure complete barrier performance.

In some embodiments, the cap 1 includes a cap top and a cap body, and the second layer 3 is disposed on the cap top and a periphery of a side of the cap body close to the cap top, so that the second layer 3 can cover the bottle mouth to be covered. In this way, not only is the cost saved, but also the complete barrier performance can be guaranteed, and higher practicability is achieved.

Based on any one of the preceding bottle caps of the present disclosure, the embodiment of the present disclosure also provides a packaging bottle, which includes a bottle body and the aforementioned bottle cap. The packaging bottle correspondingly has the above beneficial technical effects.

So far, various embodiments of the present disclosure have been described in detail. In order to avoid obscuring concepts of the present disclosure, some details that are well known in the art have not been described. Those skilled in the art can fully understand how to implement the technical solutions disclosed here according to the above descriptions. Although some specific embodiments of the present disclosure have been described in detail through examples, it should be understood by those skilled in the art that the above examples are only for illustration and are not intended to limit the scope of the present disclosure. Those skilled in the art should understand that the above embodiments can be modified or some technical features can be replaced by equivalents without departing from the scope and spirit of the present disclosure. The scope of the present disclosure is defined by appended claims.

## Claims

1. A bottle cap, comprising a cap (1) with a layered structure, wherein the cap (1) comprises a first layer (2), a second layer (3) and a third layer (4), the first layer (2) is an outer layer, the third layer (4) is an inner layer, the second layer (3) is an intermediate layer located between the first layer (2) and the third layer (4), and the second layer (3) comprises at least one low oxygen-permeable barrier layer.

2. The bottle cap according to claim 1, wherein an oxygen transmission rate of the second layer (3) is configured to be 0.0001-0.001cc/pkg*day.

3. The bottle cap according to any one of the preceding claims, wherein a material of the low oxygen-permeable barrier layer comprises nylon, ethylene-vinyl alcohol copolymer, polyvinyl alcohol, polyvinylidene chloride, aluminum and/or amorphous polyethylene terephthalate.

4. The bottle cap according to any one of the preceding claims, wherein the at least one low oxygen-permeable barrier layer comprises a nylon film, an EVOH film, a PVA film, a PVDC film, an aluminum foil film and/or an APET film.

5. The bottle cap according to any one of the preceding claims, wherein the first layer (2) and the third layer (4) are made of the same material.

6. The bottle cap according to any one of the preceding claims, wherein a thickness of the second layer (3) is 0.001mm to 1.2mm.

7. The bottle cap according to any one of the preceding claims, wherein the cap (1) comprises a cap top and a cap body, the cap top comprises the first layer (2), the second layer (3) and the third layer (4), and the cap body comprises the first layer (2).

8. The bottle cap according to any one of the preceding claims, wherein the cap (1) comprises a cap top and a cap body, and each of the cap top and the cap body comprises the first layer (2), the second layer (3) and the third layer (4).

9. The bottle cap according to any one of the preceding claims, wherein the cap (1) comprises a cap top and a cap body, and the second layer (3) is disposed on the cap top and a periphery of a side of the cap body close to the cap top, so that the second layer (3) is capable of covering a bottle mouth to be covered.

10. The bottle cap according to any one of the preceding claims, wherein the first layer (2) is made of polyolefin.

11. A packaging bottle comprising a bottle body and the bottle cap according to any one of the preceding claims.
